# EUROPEAN PATENT SPECIFICATION

(11) **EP 3 199 431 B1**
(45) Date of publication and mention of the grant of the patent: **03.10.2018**
(21) Application number: 16153365.8
(22) Date of filing: 29.01.2016
(51) Int. Cl.: B62D 35/00, F16B 2/22

(54) **ATTACHMENT CLIP FOR SPOILER SYSTEM**
BEFESTIGUNGSCLIP FÜR EIN SPOILERSYSTEM
CLIP DE FIXATION POUR SYSTÈME DE SPOILER

(43) Date of publication of application: 02.08.2017
(73) Proprietor: Ford Otomotiv Sanayi Anonim Sirketi, 34885 Istanbul (TR); Ford Global Technologies, LLC, Dearborn, MI 48126 (US)
(72) Inventor: Alkan, Okan, Eskisehir (TR); Eryilmaz, Okan, Eskisehir (TR); Kir, Özer, Odunpazari / Eskisehir (TR); Yilmaz, Engin, 26200 Tepebasi / Eskisehir (TR)
(74) Representative: Illing, Rolf

(56) References cited:
- US-A1- 2014 339 854
- US-A1- 2015 219 132

## Description

The present invention refers to an attachment clip for a spoiler system according to the preamble of claim 1 and a spoiler system with at least one attachment clip. Such an attachment clip is disclosed in document US 2014/0339854 A1.
Spoiler systems can be used to improve vehicle aerodynamics. For example, they can be fitted in the rear region of a vehicle and usually have one or more air guiding elements that lengthen the contours of the vehicle. Rear spoilers of this type can be attached to the vehicle roof or to the side walls. In the field of utility vehicles, side spoiler systems are known which are fastened to the back wall of a cabin of a vehicle or the back wall of a trailer which is connected to the vehicle. Side spoiler systems cover an air gap between a vehicle cabin and a trailer, for example.
Some elements of such spoiler systems are often adjustable, in particular pivotable. For example, a deflector can be pivoted in order to help persons to reach the back of a vehicle in case a trailer is assembled on the vehicle. The deflector is then adjustable between at least two positions. US 2015/0102633 A1 describes an exemplary rear spoiler system with adjustable air guiding elements.
The mechanism which holds a deflector in a basic position can comprise a plastic attachment clip on one element and a pin on another element of the spoiler system, wherein the pin is held in the clip when the deflector is in its basic position. For example, the attachment clip can be mounted on a pivoted deflector and the clip embraces a pin which is mounted on a fixed part of the vehicle, or vice versa. When the deflector is pivoted, the pin is pulled out of the clip.
However, the plastic attachment clip assembled to a spoiler part can sometimes not hold the pin tightly. This leads to movement of the pin within the clip and this clearance can cause squeak and rattle problems which often is one of the most annoying problems of commercial vehicle's customers who drive on long journeys. Not only on rough roads, but also on flat roads the clearance can cause noise. In addition, the plastic attachment clip sometimes has a poor design which cannot absorb vibrations which are caused when the vehicle is travelling on the road. This can also diminish the driver's quality of driving. Furthermore, the clip can deform because of the applied forces due to the repeated opening and closing operations of the attachment mechanism. Vibrations during travelling of the vehicle can then cause micro cracks which grow so that plastic parts can split.

Therefore, there still is room for improvement of attachment clips used in this type of attachment mechanisms, and it is the object of the invention to provide an attachment clip with a better design.

According to the invention, this object is achieved by an attachment clip for fixation of a movable air guiding element of a spoiler system for extending the contour of a vehicle according to claim 1. Thereby, the attachment clip comprises two flexible side walls which curve inwards for receiving a pin in a space which is formed between the two side walls. At least two sections are formed in the space between the two side walls, and an elastic element is provided in a first section and a second section is designed to receive the pin in a positive fit, wherein the elastic element contacts the pin. The elastic element can be a sponge, for example. Thus, when a pin is inserted into the attachment clip, the pin lies against the elastic element which can absorb vibrations during the travelling of the vehicle. This reduces squeak and rattle problems and increases the driving comfort. The attachment clip can be made of a flexible plastic material so that the side walls can slightly be bent outwards to receive the pin in the pin section.

In one embodiment of the invention, the two side walls are connected by a rear wall to form a U-formed cavity and the first section with the elastic element is formed adjacent the rear wall. Consequently, the elastic element is located in front of the rear wall and the pin can be pressed against this elastic element. Preferably, there is a tight fit between the elastic element and the pin so that movement of the pin within the attachment clip is prevented. The rear wall can also be used to mount the attachment clip on an element of the spoiler system, which can be a movable or a fixed part of the spoiler system.

In its simplest implementation, the two side walls can be formed by two arches which curve inwards. In other embodiments of the invention, the two side walls have a more complex structure comprising different functional parts. For example, the two side walls can comprise two pin parts designed to receive the pin, wherein the pin parts are extended by free end pieces which are bent outwards. Thereby, these free end pieces form a funnel-shaped opening for easily pressing a pin into the space between two pin parts that are curved inwards to hold the pin. In addition, the two side walls can comprise two intermediate parts which are provided between said pin parts and free end pieces. These intermediate parts can be used to enhance the stiffness of the attachment clip.

In one embodiment of the invention, the inner surfaces of the pin parts are curved inwards, whereas the outer surfaces of the pin parts are straight. Thereby, the width of the pin parts is increased in the front and end regions of the pin parts, which also increases the stiffness of the attachment clip. This stiffness again increases the stability and durability of the attachment clip, which also leads to a higher comfort for the driver of a vehicle. When the attachment clip in this mechanism is repeatedly used to fixate and release a movable air guiding element, there is less wear which again reduces squeak and rattle problems. In addition, the attachment clip is not likely to break.

Preferably, there is a barrier edge between each of the inner surfaces of the pin parts and the inner surfaces of the intermediate parts, wherein the barrier edges project inwards. Thus, the pin is held in the space between the pin parts by two opposite barrier edges which prevent the pin from slipping out of the clip. Thereby, a precise fitting is achieved and unnecessary motions are kept to a minimum. Displacement motion is inhibited and the disassembly force is increased.

In one embodiment of the invention, the distance between the opposite inner surfaces of the intermediate parts decreases in the direction of the free end pieces of the two side walls. Thus, the intermediate parts bend inwards which further increases the strength of the side walls. Preferably, the outer surfaces of the intermediate parts are straight, too. The pin parts and the intermediate parts then form a straight continuous outer surface. This prevents the pin parts from bending outwards under forces that occur during the travelling of the vehicle.

In addition, the attachment clip can comprise a widening edge between each of the inner surfaces of the intermediate parts and the inner surfaces of the free end pieces, wherein said widening edges are rounded. Hereby, the pin can easily be pressed through the gap between the rounded widening edges.

The invention also encompasses a spoiler system comprising at least one air guiding element which is movable in relation to a second element, wherein an attachment clip and a pin are provided on the air guiding element or the second element, respectively, and the attachment clip is designed to receive the pin in a positive fit. This attachment clip is implemented according to one or more of the described embodiments.

As mentioned before, the attachment clip can be provided on a fixed or a movable part of the spoiler system. In one embodiment of the invention, the attachment clip is provided on a movable air guiding element, whereas the pin is provided on the second element, for example. In particular, the air guiding element is a deflector of a side spoiler. The air guiding element can be pivoted by means of at least one hinge.

The corresponding pin is arranged, designed and dimensioned to be received in the attachment clip when the two elements are moved towards each other. Thereby, the distance between opposite barrier edges of the attachment clip is smaller than the diameter of the pin so that the pin can be held between the two curved pin parts of the side walls.

Further advantageous exemplary embodiments of the invention can be taken from the following detailed description of some exemplary embodiments of the present invention, in particular in conjunction with the figures.

In the figures:
- Fig. 1: is a view of a back wall of a vehicle with an adjustable deflector,
- Fig. 2: is an enlarged view of an attachment mechanism,

- Fig. 3: is a first enlarged view of one embodiment of an attachment clip according to the invention with a pin,
- Fig. 4: is a second enlarged view of the attachment clip according to Fig. 3, and
- Fig. 5: is a third enlarged view of the attachment clip according to Fig. 3.

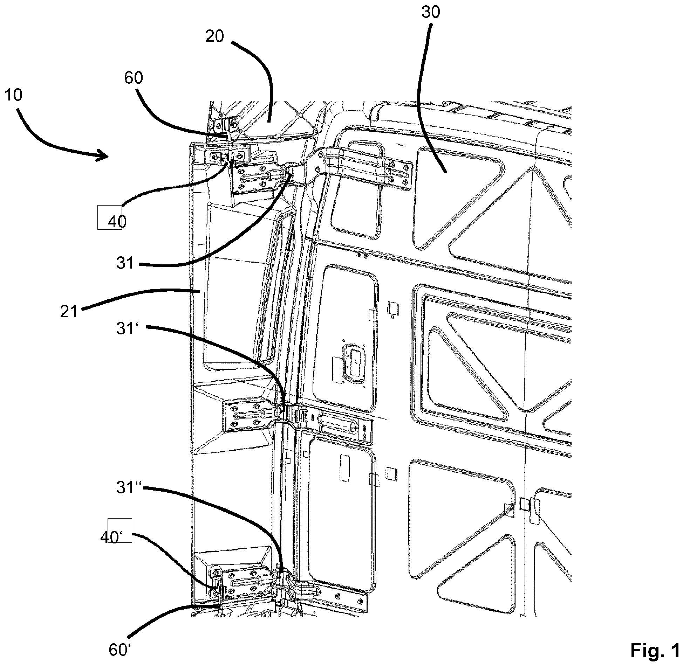

The back wall 30 of a vehicle's cabin which is partially shown in Fig. 1 comprises an adjustable air guiding element 21. This deflector 21 is pivotable to one side of the back wall 30 by means of three hinges 31, 31' and 31". Thereby, the deflector 21 can be pivoted into the plane of projection so that a person can reach the back wall 30. Two attachment clips are mounted on the deflector 21. An upper attachment clip 40 is mounted close to the top edge of the deflector 21, and a lower attachment clip 40' is mounted close to the bottom edge of the deflector 21. Two corresponding pins are mounted on adjacent spoiler parts. For example, a first pin 60 is mounted on the top spoiler part 20, whereas a second pin 60' is mounted on a bottom spoiler part (not shown).

The deflector 21 is shown in its basic position. In this position, the pins 60 and 60' are received in the attachment clips 40 and 40' to hold the deflector 21 in this position during travelling of the vehicle. When the deflector 21 is swiveled away from the back wall 30, the pins 60, 60' are pulled out of the clips 40, 40'. When the deflector 21 is swiveled back into its basic position, the pins 60, 60' are pressed into the clips 40, 40' again.

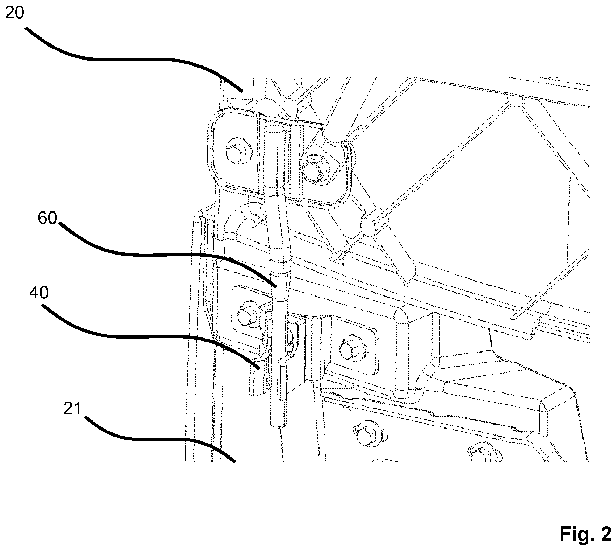

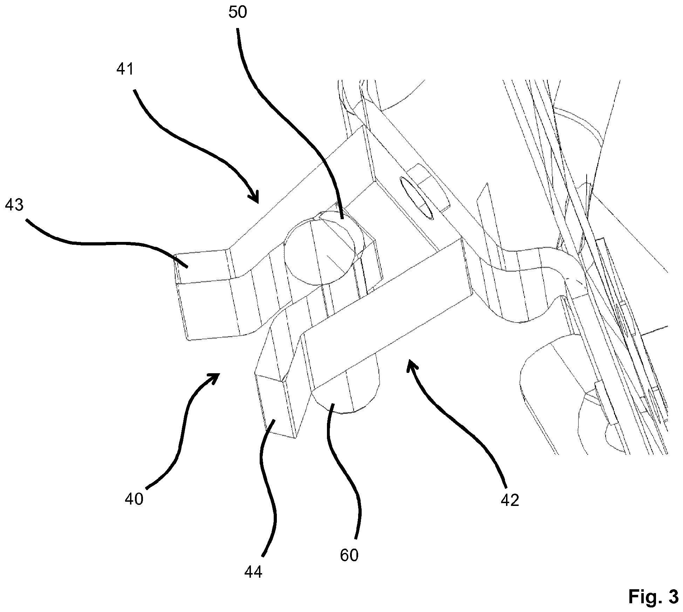

Fig. 2 shows the upper pin 60 and the upper attachment clip 40 in this locked condition. The attachment clip 40 has two side walls which are curved inwards to hold the pin 60 in a positive fit. These side walls are extended by free end pieces which are bent outwards. Hereby, the pin 60 can easily be inserted into the clip 40. This arrangement can also be derived from the enlarged view in Fig. 3 which shows an embodiment of an attachment clip according to the invention. The space between the two side walls 41 and 42 is divided into several sections. A first section is formed adjacent the rear wall of the attachment clip 40. An elastic element 50 is provided in this first section. When the pin 60 is pressed into the clip 40, the pin 60 rests against this elastic element 50.

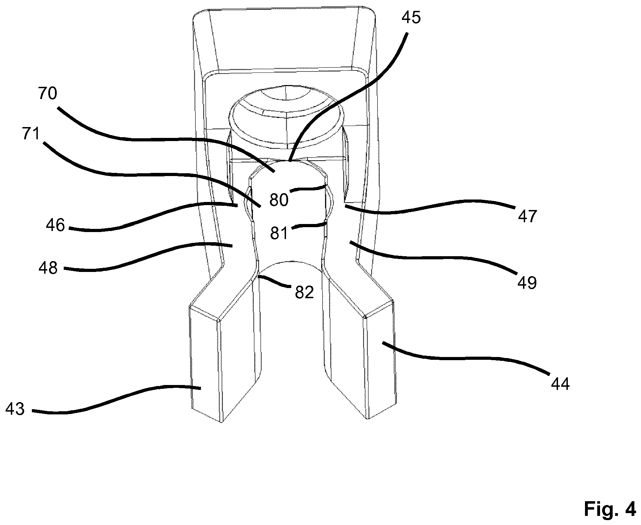

A second section is formed between two pin parts of the side walls, and the pin is received between these two pin parts which are explained in more detail by means of Fig. 4. The inner surfaces of the pin parts 46 and 47 bend inwards so that a pin can be received between them. Thus, the inner surfaces of these pin parts 46, 47 are concave. The pin parts 46, 47 form a pin section 71, and a sponge 50 (not shown in Fig. 4) is provided in another section 70 which is located between this pin section 71 and the real wall 45 of the attachment clip. Transition edges are formed between the pin parts and this sponge section 70, because the inner side surfaces of the sponge section 70 are straight, whereas the inner side surfaces of the pin parts 46, 47 are concave. Only one transition edge is marked with reference numeral 80 in Fig. 4. The outer dimensions of the sponge correspond to the inner dimensions of the sponge section so that the sponge can be received in this section. The sponge can be fixated in this area by means of an adhesive, for example.

The side walls 41, 42 further comprise two free end pieces 43 and 44 which bend outwards to form a funnel-shaped opening. Intermediate parts 48 and 49 are formed between the pin parts 46, 47 and the end pieces 43, 44. The intermediate parts 48, 49 are connected to the pin parts 46, 47 at opposite barrier edges. Only one barrier edge is marked with reference numeral 81 in Fig. 4. The pin is firmly held in the pin section 71 by these barrier edges 81. As shown in Fig. 4, the outer surfaces of the pin parts 46, 47 and the intermediate parts 48, 49 are straight to form a continuous flat outer surface.

Another edge is formed between the inner surfaces of the intermediate parts 48, 49 and the free end pieces 43, 44. This edge is called widening edge, because the clip widens significantly at this point. Only one widening edge is marked with reference numeral 82 in Fig. 4. Preferably, this widening edge 82 is rounded with a relatively large radius. Furthermore, the distance between the two widening edges 82 is smaller than the distance between the two barrier edges 81 in this embodiment.

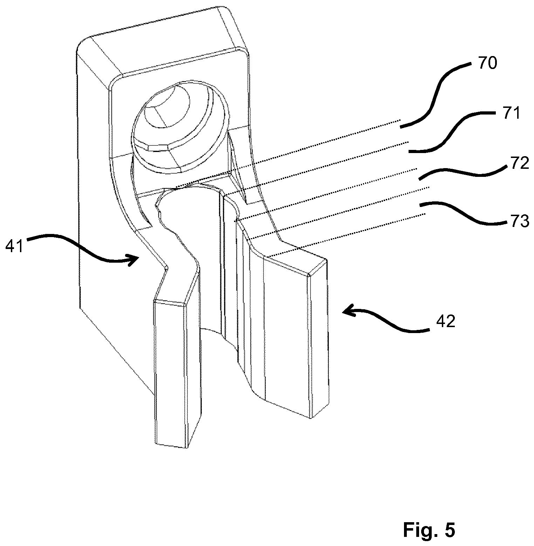

Fig. 5 shows the approximate boundaries of the four sections between the side walls 41 and 42. The first section (sponge section) 70 is located between the real wall 45 and the opposite transition edges 80. The second section (pin section) 71 is located between the transition edges 80 and the opposite barrier edges 81. A third section 72 is located between the barrier edges 81 and the beginning of the rounded widening edges 82. This section 72 can be called intermediate section, because it roughly corresponds to the space between the intermediate parts 48, 49. The area around the widening edges 82 is a fourth section 73 which can be called widening section, because the side walls 41, 42 start to bend outwards in this region. These four sections form an attachment clip which is longer than typical attachment clips. This advantageously distributes stress on the piece.

### List of reference numerals:

- 10: Spoiler system
- 20: Second element, top spoiler part
- 21: Air guiding element, deflector
- 30: Cabin, back wall
- 31, 31', 31": Hinge
- 40, 40': Attachment clip
- 41,42: Side wall
- 43, 44: End piece
- 45: Rear wall
- 46, 47: Pin part
- 48, 49: Intermediate part
- 50: Elastic element, sponge
- 60, 60': Pin
- 70: First section, sponge section
- 71: Second section, pin section
- 72: Third section, intermediate section
- 73: Fourth section, widening section
- 80: Transition edge
- 81: Barrier edge
- 82: Widening edge

## Claims

1. Attachment clip (40; 40') for fixation of a movable air guiding element (21) of a spoiler system (10) for extending the contour of a vehicle, wherein the attachment clip (40; 40') comprises two flexible side walls (41; 42) which curve inwards for receiving a pin (60; 60') in a space which is formed between the two side walls (41; 42),
**characterized in that**
at least two sections (70; 71) are formed in the space between the two side walls (41; 42), and an elastic element (50) is provided in a first section (70) and a second section (71) is designed to receive the pin (60; 60') in a positive fit, wherein the elastic element (50) contacts the pin (60; 60').

2. Attachment clip according to claim 1,
**characterized in that**
the two side walls (40; 40') are connected by a rear wall (45) to form a U-formed cavity, and the first section (70) is formed adjacent the rear wall (45).

3. Attachment clip according to claim 1 or 2,
**characterized in that**
the elastic element (50) is a sponge.

4. Attachment clip according to one of the proceeding claims,
**characterized in that**
the two side walls (41; 42) comprise two pin parts (46; 47) designed to receive the pin (60; 60'), wherein the pin parts (46; 47) are extended by free end pieces (43; 44) which bend outwards.

5. Attachment clip according to claim 4,
**characterized in that**
the two side walls (41; 42) comprise two intermediate parts (48; 49) which are provided between the pin parts (46; 47) and the free end pieces (43; 44).

6. Attachment clip according to claims 4 or 5,
**characterized in that**
the inner surfaces of the pin parts (46; 47) are curved inwards, whereas the outer surfaces of the pin parts (46; 47) are straight.

7. Attachment clip according to one of the proceeding claims 5 or 6,
**characterized in that**
there is a barrier edge (81) between each of the inner surfaces of the pin parts (46; 47) and the inner surfaces of the intermediate parts (48; 49), wherein the barrier edges (81) project inwards.

8. Attachment clip according to one of the proceeding claims 5 to 7,
**characterized in that**
the distance between the opposite inner surfaces of the intermediate parts (48; 49) decreases in the direction of the free end pieces (43; 44) of the two side walls (41; 42).

9. Attachment clip according to one of the proceeding claims 5 to 7,
**characterized in that**
there is a widening edge (82) between each of the inner surfaces of the intermediate parts (48; 49) and the inner surfaces of the free end pieces (43; 44), wherein said widening edges (82) are rounded.

10. Spoiler system (10) comprising at least one air guiding element (21) which is movable in relation to a second element (20), wherein an attachment clip (40; 40') and a pin (60; 60') are provided on the air guiding element (21) or the second element (20), respectively, and the attachment clip (40; 40') is designed to receive the pin (60; 60) in a positive fit,
**characterized in that**
the attachment clip (40; 40') is implemented according to one or more of the claims 1 to 9.

11. Spoiler system according to claim 10,
**characterized in that**
the attachment clip (40; 40') is provided on the movable air guiding element (21), wherein the pin (60; 60') is provided on the second element.

12. Spoiler system according to one of the proceeding claims 10 or 11,
**characterized in that**
the air guiding element (21) is pivoted by means of at least one hinge (31; 31'; 31 ").

13. Spoiler system according to claim 7 and one of the proceeding claims 10 to 12,
**characterized in that**
the distance between opposite barrier edges (81) is smaller than the diameter of the pin (60; 60').

14. Spoiler system according to one of the proceeding claims 10 to 13,
**characterized in that**
the air guiding element (21) is a deflector of a side spoiler.

## Patentansprüche

1. Befestigungsclip (40; 40') zur Befestigung eines beweglichen Luftführungselements (21) eines
Spoilersystems (10) zur Verlängerung der Kontur eines Fahrzeugs, wobei der Befestigungsclip (40; 40') zwei flexible Seitenwände (41; 42) umfasst, die zur Aufnahme eines Stiftes (60; 60') in einem zwischen den beiden Seitenwänden (41; 42) ausgebildeten Raum nach innen gekrümmt sind,
**dadurch gekennzeichnet, dass**
mindestens zwei Abschnitte (70; 71) in dem Raum zwischen den beiden Seitenwänden (41; 42) ausgebildet sind und ein elastisches Element (50) in einem ersten Abschnitt (70) und einem zweiten Abschnitt (71) zur formschlüssigen Aufnahme des Stiftes (60; 60') vorgesehen ist, wobei das elastische Element (50) den Stift (60; 60') berührt.

2. Befestigungsclip nach Anspruch 1,
**dadurch gekennzeichnet, dass**
die beiden Seitenwände (40; 40') durch eine Rückwand (45) zu einem U-förmigen Hohlraum verbunden sind und der erste Abschnitt (70) neben der Rückwand (45) ausgebildet ist.

3. Befestigungsclip nach Anspruch 1 oder 2,
**dadurch gekennzeichnet, dass**
das elastische Element (50) ein Schwamm ist.

4. Befestigungsclip nach einem der vorhergehenden Ansprüche,
**dadurch gekennzeichnet, dass**
die beiden Seitenwände (41; 42) zwei Stiftteile (46; 47) zur Aufnahme des Stiftes (60; 60') umfassen, wobei die Stiftteile (46; 47) durch nach außen gebogene freie Endstücke (43; 44) verlängert sind.

5. Befestigungsclip nach Anspruch 4,
**dadurch gekennzeichnet, dass**
die beiden Seitenwände (41; 42) zwei Zwischenteile (48; 49) umfassen, die zwischen den Stiftteilen (46; 47) und den freien Endstücken (43; 44) vorgesehen sind.

6. Befestigungsclip nach Anspruch 4 oder 5,
**dadurch gekennzeichnet, dass**
die Innenflächen der Stiftteile (46; 47) nach innen gekrümmt sind, während die Außenflächen der Stiftteile (46; 47) gerade sind.

7. Befestigungsclip nach einem der vorhergehenden Ansprüche 5 oder 6,
**dadurch gekennzeichnet, dass**
eine Sperrkante (81) jeweils zwischen den Innenflächen der Stiftteile (46; 47) und den Innenflächen der Zwischenteile (48; 49) vorgesehen ist,
wobei die Sperrkanten (81) nach innen ragen.

8. Befestigungsclip nach einem der vorhergehenden Ansprüche 5 bis 7,
**dadurch gekennzeichnet, dass**
der Abstand zwischen den gegenüberliegenden Innenflächen der Zwischenteile (48; 49) in Richtung der freien Endstücke (43; 44) der beiden Seitenwände (41; 42) abnimmt.

9. Befestigungsclip nach einem der vorhergehenden Ansprüche 5 bis 7,
**dadurch gekennzeichnet, dass**
eine Verbreiterungskante (82) jeweils zwischen den Innenflächen der Zwischenteile (48; 49) und den Innenflächen der freien Endstücke (43; 44) vorgesehen ist, wobei die Verbreiterungskanten (82) abgerundet sind.

10. Spoilersystem (10) umfassend mindestens ein Luftführungselement (21), das relativ zu einem zweiten Element (20) bewegbar ist, wobei ein Befestigungsclip (40; 40') und ein Stift (60; 60') an dem Luftführungselement (21) bzw. dem zweiten Element (20) vorgesehen sind und der Befestigungsclip (40; 40') zur formschlüssigen Aufnahme des Stiftes (60; 60) ausgelegt ist,
**dadurch gekennzeichnet, dass**
der Befestigungsclip (40; 40') nach einem oder mehreren der Ansprüche 1 bis 9 ausgeführt ist.

11. Spoilersystem nach Anspruch 10,
**dadurch gekennzeichnet, dass**
der Befestigungsclip (40; 40') an dem beweglichen Luftführungselement (21) vorgesehen ist, wobei der Stift (60; 60') an dem zweiten Element vorgesehen ist.

12. Spoilersystem nach einem der vorhergehenden Ansprüche 10 oder 11,
**dadurch gekennzeichnet, dass**
das Luftführungselement (21) über mindestens ein Scharnier (31; 31'; 31") schwenkbar ist.

13. Spoilersystem nach Anspruch 7 und einem der vorhergehenden Ansprüche 10 bis 12,
**dadurch gekennzeichnet, dass**
der Abstand zwischen gegenüberliegenden Sperrkanten (81) kleiner ist als der Durchmesser des Stifts (60; 60').

14. Spoilersystem nach einem der vorhergehenden Ansprüche 10 bis 13,
**dadurch gekennzeichnet, dass**
das Luftführungselement (21) ein Deflektor eines Seitenspoilers ist.

## Revendications

1. Pince de fixation (40 ; 40') servant à l'assujettissement d'un élément de guidage d'air (21) mobile d'un système de déflecteur (10) servant à étendre le contour d'un véhicule, la pince de fixation (40 ; 40') comprenant deux parois latérales (41 ; 42) souples qui s'incurvent vers l'intérieur, servant à recevoir une broche (60 ; 60') dans un espace qui est formé entre les deux parois latérales (41 ; 42),
**caractérisée en ce que**
au moins deux sections (70 ; 71) sont formées dans l'espace entre les deux parois latérales (41 ; 42), et un élément élastique (50) est placé dans une première section (70) et une seconde section (71) est conçue pour recevoir la broche (60 ; 60') par accouplement géométrique, l'élément élastique (50) venant en contact avec la broche (60 ; 60').

2. Pince de fixation selon la revendication 1,
**caractérisée en ce que**
les deux parois latérales (40 ; 40') sont raccordées par une paroi arrière (45) de façon à former une cavité en U, et la première section (70) est formée en position adjacente à la paroi arrière (45).

3. Pince de fixation selon la revendication 1 ou 2,
**caractérisée en ce que**
l'élément élastique (50) est une éponge.

4. Pince de fixation selon l'une des revendications précédentes,
**caractérisée en ce que**
les deux parois latérales (41 ; 42) comprennent deux parties à broche (46 ; 47) conçues pour recevoir la broche (60 ; 60'), les parties à broche (46 ; 47) étant prolongées par des pièces d'extrémité libre (43 ; 44) qui se courbent vers l'extérieur.

5. Pince de fixation selon la revendication 4,
**caractérisée en ce que**
les deux parois latérales (41 ; 42) comprennent deux parties intermédiaires (48 ; 49) qui sont placées entre les parties à broche (46 ; 47) et les pièces d'extrémité libre (43 ; 44).

6. Pince de fixation selon les revendications 4 ou 5,
**caractérisée en ce que**
les surfaces intérieures des parties à broche (46 ; 47) sont incurvées vers l'intérieur, tandis que les surfaces extérieures des parties à broche (46 ; 47) sont droites.

7. Pince de fixation selon l'une des revendications précédentes 5 et 6,
**caractérisée en ce que**
un bord formant barrière (81) est présent entre chacune des surfaces intérieures des parties à broche (46 ; 47) et des surfaces intérieures des parties intermédiaires (48 ; 49), les bords formant barrières (81) faisant saillie vers l'intérieur.

8. Pince de fixation selon l'une des revendications 5 à 7,
**caractérisée en ce que**
la distance entre les surfaces intérieures opposées des parties intermédiaires (48 ; 49) diminue dans la direction des pièces d'extrémité libre (43 ; 44) des deux parois latérales (41 ; 42) .

9. Pince de fixation selon l'une des revendications 5 à 7,
**caractérisée en ce que**
un bord en évasement (82) est présent entre chacune des surfaces intérieures des parties intermédiaires (48 ; 49) et des surfaces intérieures des pièces d'extrémité libre (43 ; 44), lesdits bords en évasement (82) étant arrondis.

10. Système de déflecteur (10) comprenant au moins un élément de guidage d'air (21) qui est déplaçable par rapport à un second élément (20), une pince de fixation (40 ; 40') et une broche (60 ; 60') étant respectivement placées sur l'élément de guidage d'air (21) ou le second élément (20), et la pince de fixation (40 ; 40') étant conçue pour recevoir la broche (60 ; 60') par un accouplement géométrique,
**caractérisé en ce que**
la pince de fixation (40 ; 40') est réalisée selon une ou plusieurs des revendications 1 à 9.

11. Système de déflecteur selon la revendication 10,
**caractérisé en ce que**
la pince de fixation (40 ; 40') est placée sur l'élément de guidage d'air (21) déplaçable, la broche (60 ; 60') étant placée sur le second élément.

12. Système de déflecteur selon l'une des revendications précédentes 10 et 11,
**caractérisé en ce que**
l'élément de guidage d'air (21) est installé à pivotement au moyen d'au moins une charnière (31 ; 31' ; 31'').

13. Système de déflecteur selon la revendication 7 et une des revendications 10 à 12,
**caractérisé en ce que**
la distance entre des bords formant barrières (81) opposés est inférieure au diamètre de la broche (60 ; 60') .

14. Système de déflecteur selon l'une des revendications précédentes 10 à 13,
**caractérisé en ce que**
l'élément de guidage d'air (21) est un organe de déviation d'un déflecteur latéral.
